Europäisches Patentamt

**European Patent Office**

Office européen des brevets

(19)

(11) Numéro de publication: **0 167 438**
**B1**

(12) **FASCICULE DE BREVET EUROPEEN**

(45) Date de publication du fascicule du brevet:
**31.01.90**

(51) Int. Cl.⁴: **G 01 V 1/02**

(21) Numéro de dépôt: **85401171.5**

(22) Date de dépôt: **13.06.85**

(54) **Procédé pour optimiser le spectre de fréquence des impulsions émises par un dispositif d'émission comportant plusieurs sources sismiques à implosion.**

(30) Priorité: **18.06.84 FR 8409621**

(43) Date de publication de la demande:
**08.01.86 Bulletin 86/2**

(45) Mention de la délivrance du brevet:
**31.01.90 Bulletin 90/5**

(84) Etats contractants désignés:
**DE GB IT NL**

(56) Documents cités:
**FR-A- 2 308 112**
**FR-A- 2 535 469**
**GB-A- 2 148 503**

(73) Titulaire: **INSTITUT FRANCAIS DU PETROLE, 4, Avenue de Bois-Préau, F-92502 Rueil-Malmaison (FR)**

(72) Inventeur: **Fail, Jean-Pierre, 1, rue des Saules, F-17200 Royan (FR)**

(74) Mandataire: **Kermarrec, Michelle et al, Institut Français du Pétrole 4, avenue de Bois-Préau, F-92502 Rueil-Malmaison (FR)**

ACTORUM AG

## Description

L'invention a pour objet un procédé pour optimiser le spectre de fréquence des impulsions émises par un dispositif d'émission constitué d'une pluralité de sources sismiques à implosion.

Les impulsions sismiques engendrées par les sources à implosion sont obtenues généralement par brusque contraction dans un milieu liquide d'une cavité où règne une pression très faible par rapport à la pression hydrostatique.

Cette cavité peut être délimitée par les parois d'une enceinte immergée de volume variable du type décrit par exemple dans le brevet français 1 583 737.

Elle peut être obtenue également par injection dans la masse d'eau d'une certaine quantité de vapeur d'eau surchauffée ou par la cavitation provoquée par la décharge à grande vitesse dans l'eau d'un certain volume de liquide sous pression.

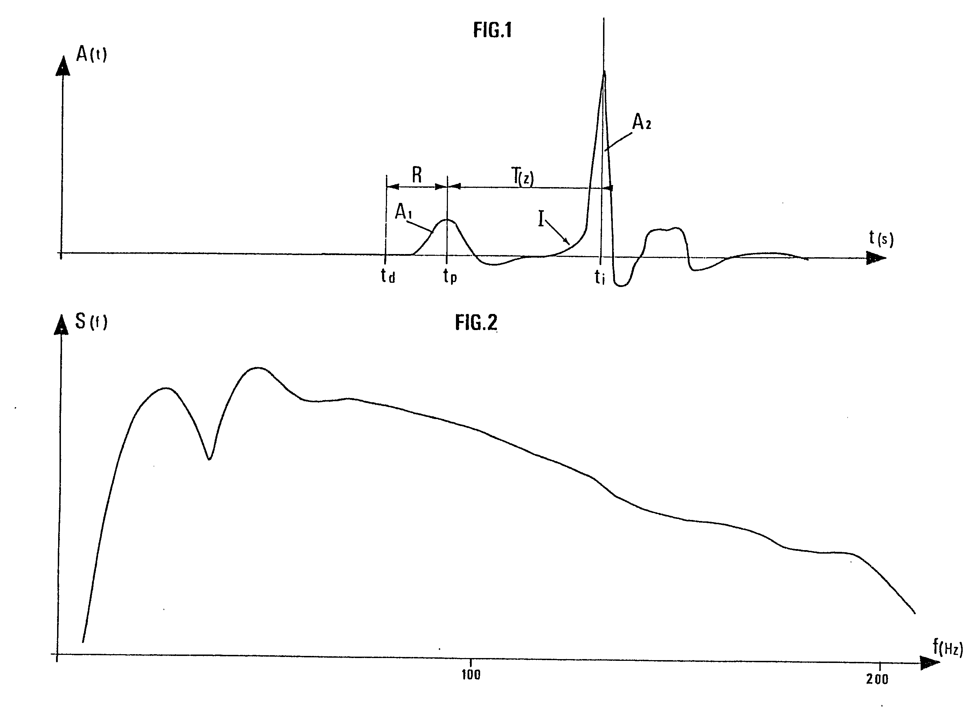

Comme on le verra dans le cours de la description et en se reportant par exemple à la figure 1, l'impulsion engendrée par une source à implosion, présente un premier pic dit précurseur correspondant selon les cas à une surpression ou une dépression par rapport à la pression hydrostatique, et qui se produit au déclenchement de la source.

L'instant de déclenchement est celui par exemple où l'on actionne les moyens mécaniques qui maintenaient l'enceinte en position de volume maximal, et où celle-ci commence à se contracter, ou bien celui où l'on procède à l'éjection à grande vitesse d'eau ou de vapeur surchauffée. Au premier pic succède un second pic de pression correspondant à l'implosion proprement dite, et dont l'amplitude est beaucoup plus grande que celle du premier pic. Le rapport d'amplitude est couramment de l'ordre de 10. L'intervalle de temps T séparant les instants où se produisent les deux pics est généralement désigné par pseudo-période.

L'impulsion engendrée par une source à implosion est brève et de ce fait, son spectre de fréquence est large, ce qui est très favorable pour réaliser en mer des opérations de prospection sismique.

Cependant on observe que le spectre de fréquence des impulsions dues à des implosions est limité dans le domaine des basses fréquences et présente un creux centré sur une fréquence $f_c$ dont la valeur est liée à la pseudo-période T par la relation:

$$f_c = \frac{3}{2T}$$

La valeur de la fréquence $f_c$ se situe généralement dans la bande des fréquences entre 25 et 50 Hz.

Le creux du spectre de fréquence qui est lié à l'existence du pic précurseur sera d'autant plus prononcé que le rapport de l'amplitude de ce pic à l'amplitude du pic d'implosion est plus grand. L'existence de ce creux est très gênante pour l'utilisation de l'implosion en prospection sismique car le spectre se trouve amputé d'une bande de fréquence très utiles pour la qualité des enregistrements.

Par la demande de brevet français publiée FR-A-2 535 469, on connaît un procédé pour engendrer sous l'eau une impulsion sismique résultant de l'interaction de plusieurs sources sismiques à implosion de pseudo-périodes. Les différentes sources sont déclenchées de manière à synchroniser leurs pics d'impulsion et à répartir dans le temps l'apparition de leurs pics de déclenchement respectifs de manière à diminuer le rapport résultant. La période de bulle dépend du volume imitial de la bulle de vapeur et de la profondeur d'immersion. C'est la variation par le volume qui est choisie pour faire varier la période. Le volume d'implosion est divisé en un nombre déterminé de bulles, distinct pour chacune des sources, de manière à rendre différentes les unes des autres les pseudo-périodes des sources. L'influence de la profondeur sur la pseudo-période est une perturbation que le procédé antérieur a pour effet de corriger.

Dans la demande de brevet français publiée FR-A-2 308 112 est décrite une source sismique marine à implosion du type canon à eau ou à vapeur qui est utilisée seule et agencée de manière à améliorer la signature d'émission. L'amélioration porte ici essentiellement sur l'adjonction d'un organe diviseur et déviateur d'écoulement capable d'atténuer les rebonds de la bulle après sa dernière implosion.

Le procédé selon l'invention et défini par la revendication 1 permet d'optimiser le spectre de fréquence des impulsions émises dans l'eau par un dispositif d'émission constitué d'une pluralité de sources sismiques à implosion et résultant de la combinaison des diverses impulsions individuelles émises par lesdites sources, chaque impulsion individuelle comprenant un pic de déclenchement survenant à un intervalle de temps de retard (R) après l'instant de déclenchement de la source, suivi d'un pic d'implosion, l'intervalle de temps entre les deux pics successifs étant la pseudo-période, dont les variations avec la profondeur d'immersion sont connues, dans lequel on immerge les différentes sources à des profondeurs différentes et on met en phase les pics d'implosion des différentes sources. Il est caractérisé en ce qu'il comporte:

– la détermination pour chacune des sources, de la durée de propagation des ondes acoustiques depuis la source jusqu'à la surface de l'eau, et en ce que

– la mise en phase des pics d'implosion est réalisée en déterminant en fonction des pseudo-périodes des différentes sources, des durées de propagation pour les différentes sources et de ces intervalles de temps de retard, les décalages de temps devant séparer les différents instants de déclenchement des sources pour mettre en phase leurs pics d'implosion respectifs après propagation jusqu'au niveau de la source la plus profondément immergée, tout en maintenant déphasés les pics de déclenchement des différentes sources à implosion, et

— le déclenchement séquentiel des différentes sources est effectué en respectant les décalages de temps préalablement déterminés, de manière que le rapport de l'amplitude du pic d'implosion résultant et des pics de déclenchement déphasés soit augmenté et le spectre d'émission amélioré.

Compte tenu de la détermination des décalages de temps, les pics d'implosion de toutes les sources s'ajoutent les uns aux autres et l'impulsion résultante présente de ce fait un pic d'implosion considérablement renforcé.

Par contre, les pics de déclenchement restant déphasés les uns par rapport aux autres, en raison de l'inégalité des pseudo-périodes des différentes impulsions qui se combinent, il se produit une atténuation de l'ensemble des pics précurseurs par rapport au pic unique d'implosion, comme on l'a vérifié expérimentalement. On observe que le résultat recherché est obtenu: le spectre de fréquence de l'impulsion résultant est beaucoup plus homogène, avec un nivellement du creux et une extension vers les basses fréquences, d'autant plus sensibles que le nombre de sources à implosion utilisé est grand. Cette amélioration de la qualité du spectre est la conséquence de l'atténuation observée des pics précurseurs qui fait que le rapport de l'amplitude du pic d'implosion à celle de l'ensemble des pics précurseurs est fortement augmenté.

D'autres caractéristiques et avantages du procédé apparaîtront à la lecture de la description ci-après d'un mode de réalisation non limitatif et en se référant aux dessins annexés sur lesquels:

— la figure 1 montre schématiquement une courbe représentative d'une impulsion acoustique engendrée par une source à implosion, obtenue par mesure à une distance déterminée, des variations de la pression engendrée par la source;

— la figure 2 représente le module du spectre de fréquence correspondant à l'impulsion représentée à la figure 1;

— la figure 3 représente schématiquement un exemple de distribution de sources $S_1$, $S_2 \ldots S_k \ldots S_n$ immergées à des profondeurs différentes $z_1, z_2 \ldots z_k \ldots z_n$;

— la figure 4 représente schématiquement la répartition chronologique, par rapport à une origine des temps commune $t_o$, des instants où se produisent les pics précurseurs et les pics d'implosions respectifs de toutes les sources de la figure 3;

— la figure 5 montre les courbes représentatives des impulsions émises en séquence par les différentes sources de la figure 3, convenablement décalées dans le temps, de manière que leurs pics d'implosion soient tous en phase à un même instant $t_c$;

— la figure 6 montre schématiquement la courbe représentative de l'impulsion résultante obtenue par combinaison des impulsions de la figure 5; et

— la figure 7 montre le module du spectre de fréquence de l'impulsion résultante représentée à la figure 6 à une échelle comparable à celle employée pour la figure 2.

Une source sismique à implosion produit des impulsions acoustiques I (Fig. 1) comportant un premier pic $A_1$ dit précurseur dont l'amplitude peut être positive ou négative. Ce pic se produit à un instant $t_p$ postérieur à l'instant de déclenchement $t_d$. L'intervalle de temps R entre ces deux instants qui dépend des caractéristiques de la source utilisée est connu par des mesures préalables. Le pic précurseur est suivi, après un intervalle de temps T appelé pseudo-période, d'un second pic $A_2$ dit pic d'implosion centré sur un instant $t_i$, et dont l'amplitude positive est beaucoup plus grande que celle du premier pic.

Le rapport entre les amplitudes du second pic et du premier pic est souvent de l'ordre de dix. La pseudo-période T varie en fonction de la profondeur suivant la loi de Rayleigh:

$$T(z) = \alpha[p(z)]^{-5/6} \qquad (1)$$

où p représente la pression hydrostatique à la profondeur où la source à implosion est immergée et $\alpha$ un coefficient de proportionnalité.

Les instants $t_d$ et $t_i$ d'une source à implosion immergée à la profondeur z sont liés par la relation:

$$t_i = t_d + R + T(z) \qquad (2)$$

La présence du pic dit précurseur a pour effet de modifier le spectre de fréquence de l'impulsion qui présente (Fig. 2) un creux dans une bande de fréquence très utile pour la prospection sismique.

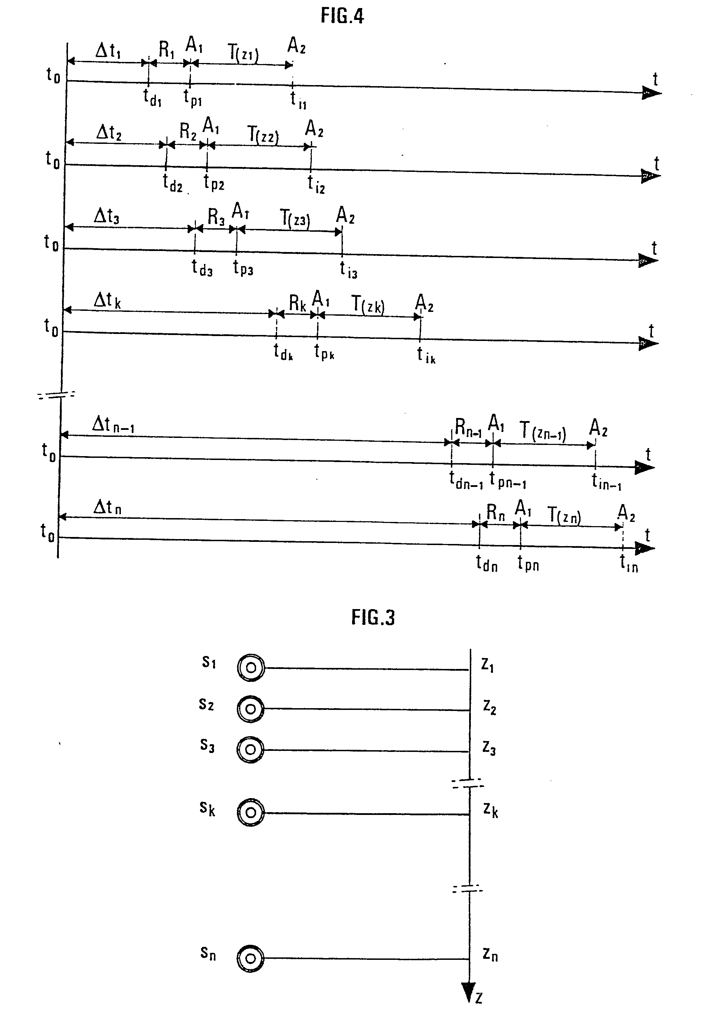

Le procédé selon l'invention comporte tout d'abord l'immersion d'un certain nombre de sources à implosion $S_1$, $S_2 \ldots S_k \ldots S_n$ (Fig. 3) à des profondeurs différentes $z_1, z_2 \ldots z_k \ldots z_n$ respectivement. Les sources ainsi immergées sont déclenchées de manière que leurs pics d'implosion $A_2$ se combinent en phase au niveau de la source $S_n$ la plus profondément immergée.

La chronologie des tirs est déterminée en prenant pour origine des temps, l'instant de référence $t_o$ où serait déclenchée une source si on la disposait en surface. Une telle source dont la pseudo-période est T(o) et le retard au déclenchement est R(o), étant déclenchée à l'instant $t_o$, son pic d'implosion surviendrait à l'instant:

$$t_o + R(o) + T(o)$$

La durée de propagation $u(z_1)$ des ondes acoustiques entre la surface et la profondeur $z_1$ étant

égale à $\dfrac{z_1}{v}$ (v est la vitesse de propagation de ces ondes), le pic d'implosion parviendrait à la profondeur d'immersion de la première source $S_1$ à l'instant:

$$t_o + R(o) + T(o) + u(z_1)$$

Pour que le pic d'implosion $A_2$ de la première source $S_1$ soit produit à cet instant, il est nécessaire que cette source soit déclenchée à l'instant antérieur:

$$t_{d1} + t_o + R(o) + T(o) + u(z_1) - T(z_1) - R_1$$

$T(z_1)$ et $R_1$ désignant respectivement la pseudo-période et le retard au déclenchement caractéristique de la source $S_1$.

Par conséquent, l'intervalle de temps $\Delta t_1$ séparant l'instant de déclenchement $t_{d1}$ et l'instant initial $t_o$ qui s'exprime par la relation:

$$\Delta t_1 = u(z_1) + T(o) - T(z_1) + R(o) - R_1$$

est égal au temps de propagation des ondes depuis la surface jusqu'à la profondeur $z_1$ auquel s'ajoutent l'écart entre la pseudo-période de la source à la profondeur $z_1$ et celle de la source fictive de surface, et la différence des deux retards $R(o)$ et $R_1$.

De la même manière, on peut établir que, quel que soit $k = 2, 3 \ldots n$, l'intervalle de temps $\Delta t_k$ séparant l'instant de déclenchement $t_{dk}$ de la source $S_k$ immergée à la profondeur $z_k$ de l'instant initial $t_o$ s'exprime par une relation analogue:

$$\Delta t_k = u(z_k) + T(o) - T(z_k) + R(o) - R_k$$

dépendant de la durée de propagation des ondes jusqu'à la profondeur $z_k$, de l'écart entre la pseudo-période de la source considérée $S_k$ et celle de la source fictive de surface, et de l'écart des deux retards caractéristiques $R(o)$ et $R_k$.

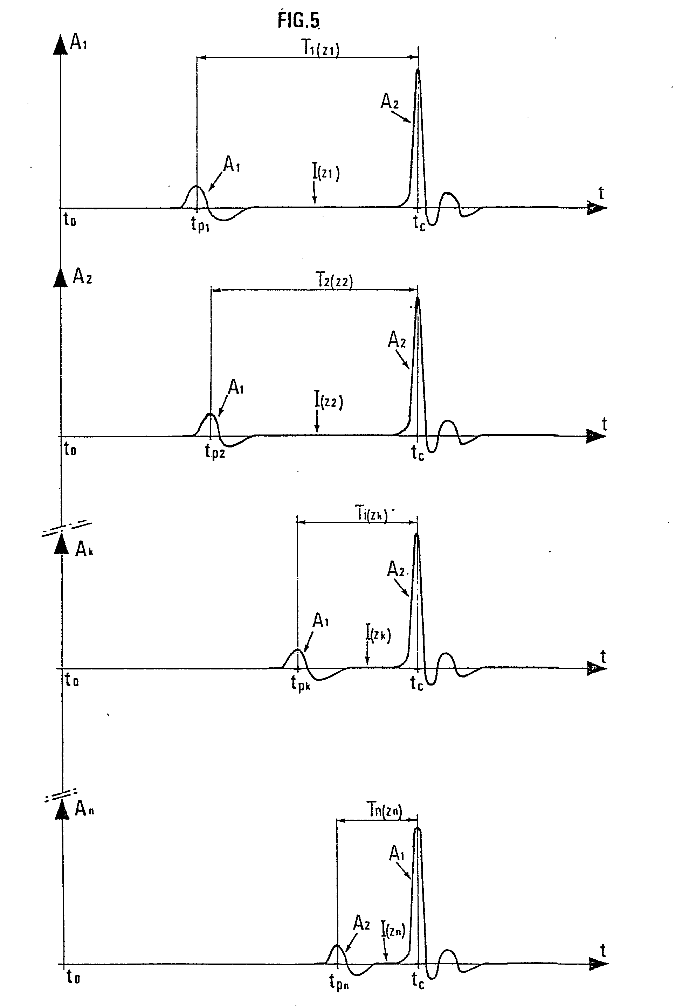

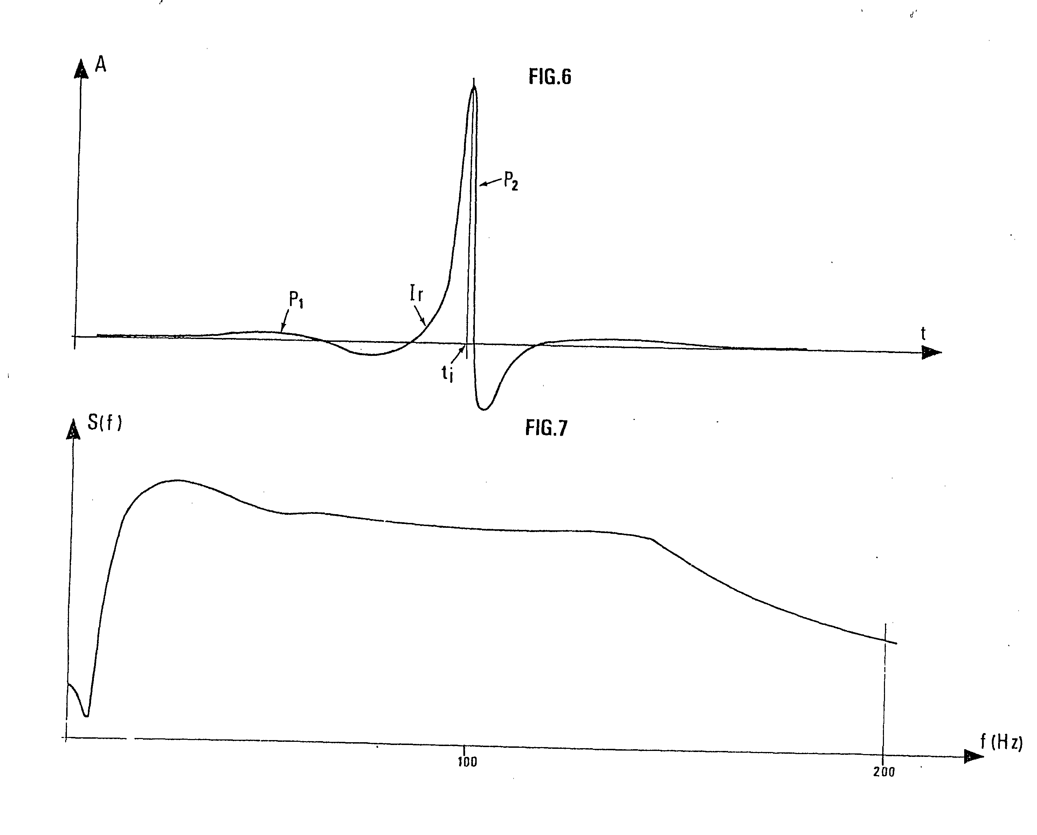

On voit sur la figure 5 que, lorsque les impulsions $I(z_1)$, $I(z_2) \ldots I(z_k) \ldots I(z_n)$, émises successivement aux profondeurs $z_1$, $z_2 \ldots z_k \ldots z_n$ en respectant les intervalles de temps $\Delta t_1 \ldots \Delta t_k \ldots \Delta t_n$ déterminées ci-dessus, se sont propagées jusqu'à la profondeur d'immersion de la source $S_n$, leurs pics d'implosion $A_2$ sont tous en phase à un instant $t_c$ et par conséquent s'ajoutent. Par contre, leurs pics précurseurs $A_1$ respectifs sont tous déphasés les uns par rapport aux autres du fait de l'inégalité des pseudo-périodes $T(z_1)$, $T(z_2) \ldots T(z_k) \ldots T(z_n)$. La combinaison de toutes les impulsions donne une impulsion résultante $I_r$ dont le pic d'implosion $A_2$ (Fig. 6) est considérablement renforcé et dont le pic précurseur $A_1$ est minimisé du fait des déphasages. L'effet est d'autant plus sensible que le nombre $n$ de sources implosives utilisées est grand.

La disparition presque complète du pic de déclenchement de l'impulsion résultante $I_r$ permet d'obtenir un spectre de fréquence élargi vers les basses fréquences et plus homogène, dans la mesure où les creux liés à l'existence des pics de déclenchement et à leur amplitude relativement grande par rapport à celle des pics d'implosion, sont presque complètement nivelés (Fig. 7).

Les différentes sources à implosion étant immergées aux profondeurs choisies, on procède à leur déclenchement en séquence en respectant les intervalles de temps prédéterminés permettant la mise en phase recherchée.

La mise en œuvre peut être effectuée en respectant à chaque «tir» les mêmes intervalles de temps déterminés à l'avance, mais on peut aussi et de préférence procéder à des ajustements pour tenir compte de façon plus précise de la profondeur d'immersion réelle de chaque source en application directe de la loi de Rayleigh. Ces ajustements pourront être effectués par exemple en temps réel, en mesurant à chaque instant au moyen de capteurs, les profondeurs d'immersion respectives de toutes les sources.

On ne sortirait pas du cadre de l'invention en disposant éventuellement des groupes de plusieurs sources à implosion à plusieurs profondeurs d'immersion différentes et en déclenchant toutes les sources d'un même groupe avec un retard identique correspondant à leur profondeur d'immersion.

On ne sortirait pas non plus du cadre de l'invention en modifiant les intervalles de temps prédéterminés selon la méthode exposée plus haut de manière à incliner le front d'onde acoustique obtenu, suivant une direction privilégiée.

## Revendications

1. Procédé pour optimiser le spectre de fréquence des impulsions émises dans l'eau par un dispositif d'émission constitué d'une pluralité de sources sismiques à implosion et résultant de la combinaison des diverses impulsions individuelles émises par lesdites sources, chaque impulsion individuelle comprenant un pic de déclenchement survenant à un intervalle de temps de retard (R) après l'instant de déclenchement de la source, suivi d'un pic d'implosion, l'intervalle de temps entre les deux pics successifs étant la pseudo-période, dont les variations avec la profondeur d'immersion sont connues, dans lequel on immerge les différentes sources à des profondeurs différentes et on met en phase les pics d'implosion des différentes sources, caractérisé en ce qu'il comporte:

— la détermination pour chacune des sources, de la durée de propagation des ondes acoustiques depuis la source jusqu'à la surface de l'eau, et en ce que

— la mise en phase des pics d'implosion est réalisée en déterminant, en fonction des pseudo-périodes des différentes sources, des durées de propagation pour les différentes sources et de ces intervalles de temps de retard, les décalages de temps devant séparer les différents instants de déclenchement des sources pour mettre en phase leur pics d'implosion respectifs après propagation jusqu'au niveau de la source la plus profondément immergée, tout en maintenant déphasés les pics de déclenchement des différentes sources à implosion, et

— le déclenchement séquentiel des différentes sources est effectué en respectant les décalages de temps préalablement déterminés, de manière que le rapport de l'amplitude du pic d'implosion résultant et des pics de déclenchement déphasés soit augmenté et le spectre de fréquence amélioré.

2. Procédé selon la revendication 1, caractérisé en ce que l'on mesure les pseudo-périodes des différentes sources avant chaque déclenchement en séquence, en mesurant leurs profondeurs réelles d'immersion.

3. Procédé selon la revendication 1, caractérisé en ce qu'une ou plusieurs sources à implosion sont disposées à chaque profondeur d'immersion choisie, les sources à implosion disposées à la même profondeur étant déclenchées avec un décalage de temps identique.

## Claims

1. Method for improving the frequency spectrum of pulses transmitted through water by an emitting device comprising a number of implosion type seismic sources and resulting from the combination of several individual pulses emitted by the said sources, each individual pulse comprising a peak triggering value occurring at a delayed interval of time (R) after the time for triggering the source, followed by a peak implosion value, the time interval between the two successive peak values being the pseudo-period, where the variations with the depth of immersion are known and in which the various sources are immersed at different depths and where the peak implosion values for the different sources are in phase, characterised in that it comprises:

   – the determination, for each source, of the time of propagation for the sound waves from the source up to the surface of the water, and where
   – phasing in of the peak implosion values is carried out by determining, in terms of the pseudo-periods for the various sources, the propagation times for the different sources and for these delayed intervals of time, the time lags separating the different times of triggering the sources in order to phase in their respective peak implosion values following propagation up to the level of the source which is immersed to the greatest depth, while maintainig out of phase the peak values for triggering the different implosion sources, and
   – the sequential triggering of the different sources by respecting the time lags previously determined, in order that the ratio in amplitude of the resultant implosion peak value and the out-of-phase peak trigger values are increased and the frequency spectrum improved.

2. Method in accordance with claim 1, characterised in that the pseudo-periods for the various sources are measured before each sequential triggering, by measuring the actual depths of immersion.

3. Method in accordance with claim 1, characterised in that one or more of the implosion sources are located at each depth of immersion selected, the implosion sources located at the same depth being triggered with an indentical time lag.

## Patentansprüche

1. Verfahren zur Optimierung des Frequenzspektrums der in Wasser durch ein Sendegerät ausgesandten Impulse, bestehend aus einer Vielzahl seismischer Implosionsquellen, resultierend aus der Kombination der verschiedenen durch diese Quellen ausgesandten Einzelimpulse, wobei jeder Einzelimpuls einen Auslösepeak umfaßt, der in einem Verzögerungszeitintervall (R) nach dem Auslöseaugenblick der Quelle auftritt, gefolgt von einem Implosionspeak, wobei das Zeitintervall zwischen den beiden aufeinanderfolgenden Peaks die Pseudoperiode ist, deren Veränderungen mit der Tauchtiefe bekannt sind, wobei man die verschiedenen Quellen auf unterschiedliche Tiefe taucht und die Implosionspeaks der verschiedenen Quellen in Phase bringt, dadurch gekennzeichnet, daß es umfaßt:

   – die Bestimmung der Fortpflanzungsdauer der akustischen Wellen für jede der Quellen von der Quelle bis zur Wasseroberläche und daß

   – das In-Phase-Bringen der Implosionspeaks realisiert wird, indem man als Funktion der Pseudoperioden der verschiedenen Quellen Fortpflanzungsdauern für die verschiedenen Quellen und aus diesen Verzögerungszeitintervallen die zeitlichen Verschiebungen bestimmt, welche die verschiedenen Auslöseaugenblicke der Quellen trennen sollen, um deren jeweilige Implosionspeaks nach Fortpflanzung bis auf das Niveau der tiefsten getauchten Quelle in Phase zu bringen, indem dabei die Auslösepeaks der verschiedenen Implosionsquellen außerphasig gehalten werden und

   – das sequentielle Auslösen der verschiedenen Quellen unter Berücksichtigung der vorher bestimmten zeitlichen Verschiebungen, derart, daß das Amplitudenverhältnis des resultierenden Implosionspeaks und der außerphasigen Auslösepeaks erhöht und das Frequenzspektrum verbessert wird.

2. Verfahren nach Anspruch 1, dadurch gekennzeichnet, daß man die Pseudoperioden der verschiedenen Quellen vor jedem Auslösen in der Sequenz mißt, indem man ihre reellen Tauchtiefen mißt.

3. Verfahren nach Anspruch 1, dadurch gekennzeichnet, daß eine oder mehrere Implosionsquellen auf jeder gewählten Tauchtiefe angeordnet werden, wobei die auf der gleichen Tauchtiefe angeordneten Implosionsquellen mit einer identischen zeitlichen Verzögerung ausgelöst werden.

FIG.1

FIG.2

EP 0 167 438 B1

# FIG.4

# FIG.3

## FIG.5

FIG.6

FIG.7

EP 0 167 438 B1